# EUROPÄISCHE PATENTSCHRIFT

(11) **EP 3 157 746 B1**
(45) Veröffentlichungstag und Bekanntmachung des Hinweises auf die Patenterteilung: **21.06.2023**
(21) Anmeldenummer: 15713332.3
(22) Anmeldetag: 31.03.2015
(51) Int. Cl.: B32B 7/12, B32B 27/10, B32B 27/12, B32B 27/32, B29C 65/00, B65D 33/01, B32B 1/08, B32B 3/06, B65D 75/40, B65D 30/18, B65D 30/24, B32B 3/26, B32B 5/02, B32B 5/26

(54) **PACKMITTEL SOWIE VORRICHTUNG UND VERFAHREN ZUR HERSTELLUNG EINES PACKMITTELS**
PACKAGING MEANS AS WELL AS DEVICE AND METHOD FOR PRODUCING A PACKAGING MEANS
MOYEN D'EMBALLAGE ET DISPOSITIF ET PROCÉDÉ DE FABRICATION D'UN MOYEN D'EMBALLAGE

(30) Priorität: 08.04.2014 DE 102014206790
(43) Veröffentlichungstag der Anmeldung: 26.04.2017
(73) Patentinhaber: Windmöller & Hölscher KG, 49525 Lengerich (DE); Vutz, Jürgen, 48268 Greven (DE); Köhn, Uwe, 49078 Osnabrück (DE); Hawighorst, Thomas, 49205 Hasbergen (DE); Herschbach, Christof, 48157 Münster (DE); Schneider, Bernd, 49084 Osnabrück (DE)
(72) Erfinder: VUTZ, Jürgen, 48268 Greven (DE); KÖHN, Uwe, 49078 Osnabrück (DE); HAWIGHORST, Thomas, 49205 Hasbergen (DE); HERSCHBACH, Christof, 48157 Münster (DE); SCHNEIDER, Bernd, 49084 Osnabrück (DE)
(86) Internationale Anmeldenummer: PCT/EP2015/056969
(87) Internationale Veröffentlichungsnummer: WO 2015/155054

(56) Entgegenhaltungen:
- EP-A1- 0 753 253
- DE-A1-102009 036 556
- DE-U1-202005 003 539
- GB-A- 945 879
- US-A- 3 195 801
- US-A1- 2001 021 281
- US-A1- 2004 105 994
- US-A1- 2006 194 004
- US-A1- 2010 150 479
- US-B1- 6 265 002
- US-B1- 6 365 659

## Beschreibung

Die Erfindung betrifft ein sackförmiges Packmittel nach dem Oberbegriff des Anspruchs 1 sowie ein Verfahren zur Herstellung eines solchen Packmittels nach dem Oberbegriff des Anspruchs 16.

Zum Zweck des Schutzes der Umgebung oder des Packgutes, der Portionierung, der Lagerung, des Transports, der physischen Manipulation sowie der Vermarktung ist es häufig vorgesehen, ein Packgut mit einer Verpackung zu umhüllen, wobei dies auch bedeuten kann, dass das Packgut in die Verpackung gegeben wird.

Eine Verpackung umfasst häufig einen Packstoff, der das Grundmaterial, also den Werkstoff, einer Verpackung darstellt. Aus diesem Packstoff wird das Packmittel hergestellt. Zu dessen Herstellung werden oft noch Packhilfsmittel wie etwa Klebstoffe benötigt.

Als Packstoff werden seit langer Zeit sehr oft synthetische Werkstoffe verwendet. Insbesondere Kunststoffe finden Verwendung in Form von Folien, verwebte Kunststoffbändchen oder als Vliese.

Der das letztgenannte Material umfassende Packstoff ist der Ausgangspunkt für ein Packmittel gemäß der vorliegenden Erfindung.

Ein Packmittel ist aus der EP 0 753 253A1 bekannt. Ein schlauchförmiges Packmittel umfasst eine innere, hochbenetzbare Schicht, die aufgrund einer Kapillarwirkung fortwährend einen Teil der Flüssigkeit, die im Inneren des Packmittels beinhaltet wird, aufnimmt. Die äußere Schicht des Packmittels ist flüssigkeitsdurchlässig, so dass im Endeffekt die Flüssigkeit langsam an die Umgebung abgegeben wird.

Die US 6 365 659 B1 offenbart mehrlagige Bahnen, wobei eine Lage ein Vliesstoff sein kann und eine weitere Lage eine Beschichtung. Diese Bahnen können für Packmittel verwendet werden.

Die US 2004 105994 A1 offenbart koexdrudierte bzw. laminierte Folien, die auch für Verpackungsanwendungen geeignet sind.

Die US 2006 194004 A1 zeigt dreischichtige Laminate, die von Rolle auf Rolle hergestellt werden und sich auch für Verpackungen eignen. Eine Schicht kann dabei ein Vliesstoff sein.

Die DE 2009 036556 A1 offenbart eine Vorrichtung und ein Verfahren zur Herstellung von Säcken, welche ein Vliesmaterial umfassen

Ein Vlies beziehungsweise Vliesstoff ist dabei ein Gebilde aus Fasern mit begrenzter Länge und/oder Endlosfasern jeglicher Art und jeglichen Ursprungs, die auf irgendeine Weise zu einem Vlies zusammengefügt und miteinander verbunden sind. Ein Vlies ist dabei ein flächiges Gebilde, d. h., die Länge und die Breite sind sehr groß im Vergleich zu dessen Dicke.

Aus der WO 2011/018318 ist bereits ein Packstoff bekannt, welcher als erste Schicht einen Vliesstoff umfasst, welcher mit einer Kunststoffbahn als zweite Schicht verbunden ist. Dabei stellt das Vlies eine hohe Tragfestigkeit zur Verfügung, d. h., es kann stark belastet werden. Die Kunststoffbahn dient unter anderem als Feuchtigkeitsbarriere.

Die genannte Druckschrift schlägt weiterhin vor, aus diesem Packstoff ein sackförmiges Packmittel, insbesondere einen Ventilsack zu schaffen. Die Kunststoffbahn ist außen, also nicht dem Sackinneren zugewandt, angeordnet, um bei der vorgeschlagenen Bildung eines mit einem Deckblatt belegten Kreuzbodens eine Heißluftschweißung zu ermöglichen.

Es hat sich jedoch in der Praxis herausgestellt, dass das benötigte Vlies ein Flächengewicht von über 80 g/qm (Gramm pro Quadratmeter) haben muss, um eine ausreichende Festigkeit bereitzustellen. Diese Festigkeit wird beispielsweise benötigt, um einen Ventilsack zum Abfüllen und Transportieren von Baustoffen, insbesondere Zement, zu schaffen, wobei pro Packmittel in der Regel 15 bis 50 kg abgefüllt sind.

Ein Vlies mit einer derartig hohen Festigkeit ist allerdings teuer.

Es besteht daher der Wunsch nach einem Packmittel, das eine ausreichende Festigkeit bereitstellt, jedoch günstiger herzustellen beziehungsweise zu beschaffen ist.

Erfindungsgemäß wird diese Aufgabe durch die Merkmale des Anspruchs 1 gelöst. Demnach ist in dem Packmittel ein Packstoff, ausgehend von einem Vliesstoff, das zumindest bereichsweise mit einem Kunststoff verbunden ist, vorgesehen, wobei als Kunststoff zumindest eine monoaxial oder biaxial gereckte Folienbahn vorgesehen ist.

Erfindungsgemäß ist vorgesehen, beide Materialien auch dauerhaft miteinander zu verbinden, wofür ein Verbindungsstoff oder ein Verbindungsmittel vorgesehen ist. Dieses Verbindungsmittel ist dabei ein Polyolefin, insbesondere Polypropylen.

Ferner umfasst der Packstoff Entlüftungsöffnungen (105, 106), wobei zwischen 50 und 80 Entlüftungsöffnungen pro Quadratzentimeter vorgesehen sind, wobei jede einzelne Entlüftungsöffnung einen Durchmesser von maximal 0,8 mm aufweist.

Weiterhin wird die Aufgabe durch den Anspruch 16 gelöst.

In einem Reckprozess wird dabei eine Folienbahn zunächst auf eine bestimmte Temperatur erwärmt und dann durch verschiedene Walzenspalte geführt, wobei ein nachfolgender Walzenspalt eine höhere Umfangsgeschwindigkeit als ein vorangehender Walzenspalt hat, so dass die Folie gelängt wird (Längsrecken). Dabei richten sich die bislang ungeordneten Polymere zum Teil parallel zur Längsrichtung aus, so dass deren Bindungen untereinander stärker werden. Die Folge ist eine deutlich erhöhte mechanische Belastbarkeit des Materials. Bei dieser Art des Reckens spricht man vom monoaxialen Recken. Nach dem Recken wird die Folie in der Regel mittels temperierter Walzen abgekühlt und/oder thermofixiert.

Ein ähnlicher Effekt wird erreicht, indem die Folie quer zur Transportrichtung gereckt, also gezogen, wird (Querrecken). Auch hier wird vor und nach dem Recken die Temperatur der Folienbahn beeinflusst, wofür auch hier in der Regel Walzen einsetzbar sind. Wird das Querrecken zusätzlich zum Längsrecken vorgenommen, so spricht man vom biaxialen Recken.

Insbesondere biaxial gereckte Folien zeichnen sich durch ihre hohe Belastbarkeit aus.

Dem Recken gleichwertig ist das Strecken, wobei beide Begriffe in der Fachwelt häufig synonym verwendet werden. Beim Strecken erfolgt die Dehnung der Folie in einer oder in beiden der beschriebenen Richtungen, also längs und quer zur Transportrichtung, unmittelbar nach der Extrusion der Folie, wenn diese noch im warmen Zustand ist. In diesem Fall ist es nicht mehr notwendig, die Folie separat zu erwärmen.

Grundsätzlich problematisch ist jedoch, dass sich insbesondere gereckte Folien sehr schlecht zu Packmitteln weiterverarbeiten lassen, da sie sich nur mit hohem Aufwand miteinander verbinden lassen. Hier wären teure Spezialklebstoffe oder andere Hilfsmittel vonnöten.

Bei Vliesstoffen, die im englischen Sprachgebrauch auch als "nonwoven" bezeichnet werden, hat sich hingegen gezeigt, dass diese sich teilweise besser verarbeiten lassen, aber eben bei geeigneter Festigkeit hohe Kosten verursachen.

Bringt man nun jedoch beide vorgenannten Materialien, also einen Vliesstoff und eine gereckte Folie zusammen, so können die genannten positiven Eigenschaften beider Materialien vorteilhaft genutzt werden. So kann wegen der hohen Festigkeit der gereckten Folie ein Vliesstoff mit geringerer Festigkeit vorgesehen sein. Vorteilhaft ist es daher, wenn die gereckte Folie wenigstens die gleiche und bevorzugt eine höhere Festigkeit zur Verfügung stellt als der Vliesstoff.

Ein Vliesstoff mit einer deutlich geringeren Festigkeit als der eingangs genannte Vliesstoff mit einem Flächengewicht von 80 g/qm lässt sich deutlich einfacher und damit preisgünstiger herstellen. Auch mono- oder biaxial gereckte Folie ist handelsüblich und zu geringen Kosten zu beschaffen. So kann der Vliesstoff ein Flächengewicht von 10 bis 100 g/qm, bevorzugt 20 bis 50 g/qm, insbesondere von 30 bis 40 g/qm aufweisen. Die Folienbahn kann vergleichbare Flächengewichte haben. Hier ist ein Flächengewicht von 10 bis 100 g/qm, bevorzugt 30 bis 70 g/qm und insbesondere 40 bis 60 g/qm vorteilhaft.

Besonders vorteilhaft als Kunststoff ist ein Polyolefin. Als bevorzugtes Polyolefin ist Polypropylen vorgesehen, welches den Vorteil bietet, dass es sich in besonderem Maße durch Recken stabiler machen lässt.

In einer besonders bevorzugten Ausgestaltung der Erfindung ist die Folienbahn eine BOPP-Bahn, wobei BOPP für "biaxial oriented polypropylene" steht. Dieses Material wird großindustriell hergestellt und ist entsprechend preisgünstig zu erhalten. Zudem wird es von vielen Herstellern produziert und steht weltweit zur Verfügung.

Bei den Vliesstoffen wird bevorzugt auf solche Vliesstoffe zurückgegriffen, deren Fasern Chemiefasern umfassen. In weiterer Ausgestaltung des erfindungsgemäßen Packstoffs sind Chemiefasern aus synthetischen Polymeren vorgesehen. Auch hier werden polyolefinische Grundprodukte bevorzugt, so dass der erfindungsgemäße Packstoff vorteilhafterweise einen polypropylen- oder einen polyethylenhaltigen Vliesstoff umfasst. Selbstverständlich sind hier auch andere synthetische Polymere einsetzbar, so dass die vorgenannte Konkretisierung keinesfalls als Beschränkung des erfinderischen Gedankens zu verstehen ist.

Es können Vliesstoffe sein, deren Fasern direkt aus durch Düsen hindurchtretende Polymerschmelzen ersponnen und mittels heißer Luftströme bis zum Zerreißen gestreckt werden (Meltblown-Verfahren). Hierbei können sich Endlosfaser und/oder längere Spinnfassern bilden. Alternativ ist ein Vliesstoff vorgesehen, bei dem die Polymerschmelze ebenfalls aus einer Düse austritt, aber mittels kalter Luft verstreckt wird (Spunbond-Verfahren). In beiden Verfahren werden die abgelegten Fasern mittels Walzen verpresst, so dass eine feste Verbindung der Fasern untereinander besteht.

In einer vorteilhaften Kombination beider Elemente des Packstoffs, also des Vliesstoffes und des Kunststoffes, umfassen diese jeweils im Wesentlichen Polypropylen. Diese Kombination bietet den großen Vorteil, dass es als sortenreines Gebilde sehr gut zu recyceln ist.

Zur Herstellung eines solchen Packstoffs ist es vorteilhaft, das Verbindungsmittel, hier wieder vorteilhafterweise ein Polyolefin, insbesondere den Kunststoff aufzutragen und beide Komponenten miteinander so in Kontakt zu bringen, dass das Verbindungsmittel ausschließlich zwischen ihnen angeordnet ist.

Das Verbindungsmittel kann mit einem Flächengewicht von 5 bis 30 g/qm vorgesehen werden, so dass letztendlich der Packstoff ein Flächengewicht von 25 bis 230 g/qm aufweisen kann.

Das erfindungsgemäße Packmittel lässt sich in einer weiteren vorteilhaften Ausführungsform damit verbessern, dass der Packstoff zumindest bereichsweise eine dritte Schicht umfasst, die ein faserhaltiges Material umfasst.

Vorteilhaft ist hier die Verwendung von Papier. Unter Papier ist hierbei ein flächiger Werkstoff zu verstehen, der im Wesentlichen aus Fasern meist pflanzlicher Herkunft besteht und durch Entwässerung einer Faseraufschwemmung auf einem Sieb, durch Verdichtung sowie durch Trocknung gebildet wird. Papier kann zur Steigerung der Festigkeit des Packstoffes herangezogen werden. Dies gilt insbesondere, wenn Kraftpapier, bei dem die Fasern zu einem überwiegenden Teil (> 90 %) aus Zellstofffasern bestehen, vorgesehen ist.

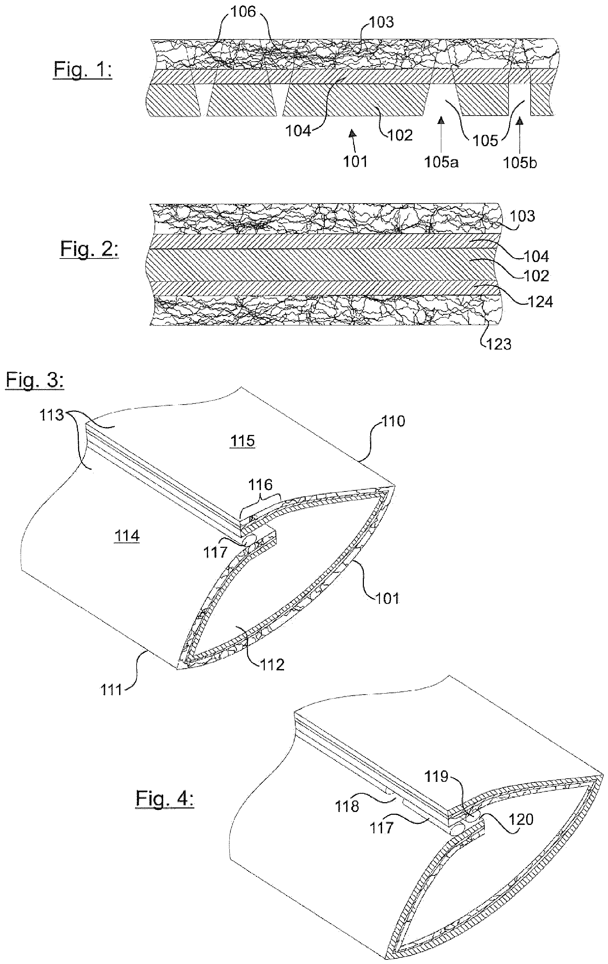

Ebenfalls vorteilhaft ist das Vorsehen eines Vliesstoffes als dritte Schicht. Der Vliesstoff kann ebenfalls der Erhöhung der Gesamtfestigkeit dienen. Er kann aber auch für den folgenden Zweck vorgesehen sein: der Packstoff kann Entlüftungsöffnungen (siehe hierzu auch die Beschreibung der Figur 1) enthalten, die packgutseitig mit einem Vliesstoff abgedeckt sein können. Da ein Vliesstoff häufig auch eine Filterwirkung hat, kann relativ zuverlässig vermieden werden, dass das Packgut durch die Entlüftungsöffnungen nach außen gelangt.

Das Flächengewicht der dritten Schicht kann zwischen 10 g/qm und 150 g/qm, insbesondere zwischen 20 g/qm und 50 g/qm betragen.

Bei dem Vorsehen einer dritten Schicht ist es grundsätzlich möglich, dass die Folienbahn, welche die zweite Schicht bildet, nicht gereckt ist. Diese Kombination kann eine eigene Erfindung darstellen und wäre mit allen weiteren in dieser Offenbarung aufgeführten Merkmalen kombinierbar, soweit keine Widersprüche auftreten.

Vorteilhaft ist es, wenn die dritte Schicht an der der ersten Schicht abgewandten Seite der zweiten Schicht angeordnet ist. In dieser Ausgestaltung lässt sich die dritte Schicht insbesondere dann vorteilhaft anbringen, wenn sie nur Bereiche des Packstoffes belegt.

Die Verbindung der dritten Schicht mit der ersten und/oder zweiten Schicht erfolgt vorteilhafterweise mit einem weiteren Verbindungsstoff, der aber in weiterer Ausgestaltung mit dem ersten Verbindungsstoff identisch sein kann, was sich auf den Herstellungsprozess des Packstoffes positiv auswirkt.

Besondere Vorteile ergeben sich bei der Ausgestaltung des Packmittels als sackförmiges Packmittel, worauf im Folgenden näher eingegangen wird.

In einer vorteilhaften Weiterbildung des Packmittels umfasst dieses eine Längsnaht, die daraus gebildet ist, dass zwei Randbereiche des Packstoffes übereinander gelegt und miteinander verbunden sind. Vorteilhafterweise sind die Grenzen dieser Randbereiche, also deren Ränder, parallel zueinander angeordnet. Die Randbereiche sind erfindungsgemäß mit zumindest einer Klebstoff- und/oder Extrudatspur dauerhaft miteinander verbunden. Besonders bevorzugt ist hier eine Extrudatspur, wobei ein Extrudat ein unter Druck- und/oder Temperatureinfluss verflüssigtes, ursprünglich jedoch als festes Material vorliegendes Kunststoffmaterial ist, welches sich auf dem Packstoff wieder verfestigt hat, wobei es zwischen den sich überlappenden Randbereichen eine dauerhafte Verbindung geschaffen hat.

Als Kunststoffmaterial bietet sich auch hier ein Polyolefin, insbesondere Polypropylen, an. Bei der Verwendung von Polypropylen kann das komplette Packmittel aus sortenreinen Materialien bestehen.

Auf diese Weise ist eine kostengünstige schlauchförmige Umhüllung bereitgestellt, die nun in unterschiedlicher weiterer Ausgestaltung als Verpackung dienen kann.

In weiterer vorteilhafter Ausgestaltung ist vorgesehen, dass die Randbereiche mit zumindest zwei parallel zueinander verlaufenden Klebstoff- oder Extrudatspuren miteinander verbunden sind. In diesem Fall ist weiter vorgesehen, dass jede dieser Spuren zumindest eine Unterbrechung umfasst, wobei diese Unterbrechungen in Richtung des Längsnaht gesehen an unterschiedlichen Stellen angeordnet sind. Somit ist eine so genannte Labyrinth-Entlüftung bereitgestellt, über welche das Packmittel effektiv entlüftet werden kann, ohne dass Packgut entweichen kann. Dies gilt vor allem, wenn pulvriges oder staubiges Packgut, wie etwa Baustoffe oder pulverförmige Nahrungsmittel wie Mehl, verpackt werden. Insbesondere im Zusammenhang mit dem Vliesstoff, der in dem das Packmittel bildenden Packstoff vorgesehen ist, ergeben sich überraschende Vorteile dieser Labyrinth-Entlüftung. Wenn eine einfache Überlappung gebildet ist, ist zwangsläufig zumindest eine Wandung dieser Labyrinth-Entlüftung durch eine Oberfläche gebildet, die einen Vliesstoff umfasst. Vliesstoff hat nun eine filternde Wirkung, d. h., es ist in der Lage, Fasern, Stäube und Pulver zu binden, so dass diese Bestandteile des Packguts weit besser zurückgehalten werden als in einem reinen Kunststoffpackmittel mit Labyrinth-Entlüftung.

In einer weiteren vorteilhaften Ausgestaltung der Erfindung ist vorgesehen, dass an dem wie vorstehend beschriebenen Schlauchstück zwei Böden angeformt sind. Diese Böden sind vorteilhafterweise Kreuzböden.

Ein solcher Kreuzboden zeichnet sich dadurch aus, dass die beiden Lagen des Schlauchstücks zur Bildung eines Bodenrechtecks und zweier Dreieckstaschen auseinander gezogen sind und die beiden sich bildenden Laschen des Bodenrechtecks so zurückgefaltet sind, dass sich ihre beiden Randbereiche überlappen. Die äußeren Ecken der Dreieckstaschen sind dabei ebenfalls bereichsweise auf sich zurückgeschlagen, und auch die seitlichen Bereiche der Laschen überdecken die Dreieckstaschen. In dieser Konstellation können die sich überlappenden Bereiche des Packstoffs jeweils miteinander verbunden sein. Vorteilhaft ist dabei, wenn diese miteinander versiegelt sind, d. h. durch Wärme- beziehungsweise Hitzezufuhr derart aufgeweicht wurden, dass sie nach einem Zusammenpressen und Erkalten stoffschlüssig miteinander verbunden sind.

In bevorzugter Ausführungsform der Erfindung ist zumindest ein Boden noch mit einem Deckblatt belegt, welches jede dieser vier soeben beschriebenen Komponenten eines Kreuzbodens zumindest teilweise überdeckt und mit ihnen verbunden ist. Als Verbindungsart ist hier ebenfalls eine Siegelung vorteilhaft. Vorteilhafterweise ist das Deckblatt vollflächig mit dem Boden verbunden, so dass, insbesondere wenn es beide Laschen und beide Dreieckstaschen teilweise bedeckt, auf eine separate Verbindung der Dreieckstaschen mit den Laschen und der Verbindung der Laschen untereinander verzichtet werden kann. Diese bringt Vorteile bei der Herstellung, da diese kostengünstiger erfolgen kann.

Weitere Kostenvorteile kann es bringen, wenn das Deckblatt nicht aus dem erfindungsgemäßen Packstoff, sondern aus einem einfacheren, beispielsweise einschichtigen Packstoff gebildet ist. Vorteilhaft ist in diesem Zusammenhang wieder ein Vliesstoff, da dieser sich, wie bereits beschrieben, auf einfache Weise mittels Klebstoff, Extrudat oder einer Siegelung mit der äußeren Schicht des Packmittels, beispielsweise der Vliesstoffschicht, verbinden lässt. Jedoch ist es in diesem Falle bevorzugt, dass der Vliesstoff des Deckblatts ein höheres Flächengewicht aufweist als der Vliesstoff, der in einer Schicht des Packstoffs umfasst ist, um eine ausreichende Festigkeit bereitzustellen.

In einer weiteren vorteilhaften Ausgestaltung ist an einem Boden oder an dem Boden zumindest eine Füllöffnung, die bevorzugt als Ventil ausgestaltet ist, vorgesehen. Diese Füllöffnung ist eine rohrartige Öffnung, die zwischen einer der Dreieckstaschen und den beiden Laschen des Bodens vom Außenraum des Packmittels her den Innenraum des Packmittels zugänglich macht. Über diese Füllöffnung kann der sonst - bis auf die Entlüftungsöffnungen - in der Regel vollständig verschlossene Sack mit dem Packgut befüllt werden. Nach dem Befüllen kann sich die Öffnung oft unter Einfluss des Gewichts des Packguts verschließen, weshalb man häufig von einem Ventil spricht. Eine besonders gute Ventilwirkung erreicht man jedoch mit dem Einsatz eines separaten Ventilzettels, der schlauchförmig ausgebildet ist und in die oben beschriebene Füllöffnung eingesteckt und befestigt ist. Der Ventilzettel ist dabei in der Regel bereits an dem Bodendreieck und optional an Bereichen der beiden Laschen befestigt, bevor der Boden zugefaltet ist. Mit dem Zufalten des Bodens wird der Ventilzettel ebenfalls zusammengefaltet und bildet dann ein Schlauchstück. Alternativ könnte ein solches Schlauchstück bereits vorgefertigt an einem aufgezogenen Boden befestigt sein, was in einem Herstellungsprozess allerdings aufwändiger ist. Der Ventilzettel oder das Ventilschlauchstück ist dabei so dimensioniert, dass es in seiner Längsachse und vom Inneren des Packmittels gesehen weiter als das Bodendeckblatt reicht.

Der Ventilzettel kann den erfindungsgemäßen Packstoff umfassen oder vollständig hieraus bestehen, oder einen anderen Werkstoff, wie etwa eine Kunststofffolie, umfassen. Auch der Ventilzettel kann an den Bodenbestandteilen mit Klebstoff, Extrudat oder einer Siegelung befestigt sein.

Weitere Ausführungsbeispiele und Vorteile der Erfindung gehen aus der gegenständlichen Beschreibung hervor.

Die einzelnen Figuren zeigen:
- Fig. 1: Schichtaufbau eines Packstoffs eines erfindungsgemäßen Packmittels
- Fig. 2: Schichtaufbau eines weiteren Packstoffs eines erfindungsgemäßen Packmittels
- Fig. 3: ein zweites Ausführungsbeispiel eines Packmittels
- Fig. 4: ein sackförmiges Packmittel mit angeformten Böden
- Fig. 5: Prinzipskizze einer Schlauchbildung aus vlieshaltigem Material
- Fig. 6: Prinzipskizze zur Sackbildung aus einem Schlauch mit vlieshaltigem Material

Fig. 1 zeigt ein Ausführungsbeispiel eines erfindungsgemäßen Packstoffs 101, der aus zwei Schichten besteht. Generell ist in der vorliegenden Patentanmeldung als Schicht ein einzelner Werkstoff zu verstehen, wobei dieser insbesondere als ein Flächengebilde oder in formloser Form vorliegen kann. Bei einem mehrschichtigen Packstoff 101 sind diese einzelnen Werkstoffe jedoch dauerhaft, wenn auch nicht zwingend, vollflächig miteinander verbunden.

Das gezeigte Ausführungsbeispiel eines Packstoffs 101 umfasst zwei Schichten, wobei die untere Schicht eine gereckte Kunststofffolie 102 und die obere ein Vliesstoff 103 sind. Diese beiden Schichten werden mit einem Verbindungsstoff 104 aneinander befestigt, wobei der Verbindungsstoff 104 zumindest unmittelbar vor oder während der Verbindung formlos ist und auf die obere oder untere Schicht aufgetragen wird, wobei anschließend die jeweils andere Schicht aufgelegt und gegebenenfalls verpresst wird.

Weiterhin sind die Öffnungen 105, 106 gezeigt, die in dem Packstoff 101 vorgesehen sind. Diese dienen der Entlüftung des Packguts und durchstoßen daher den Packstoff 101 vollständig. Sie können mechanisch, beispielsweise mit Nadeln 30, aber auch mit anderen Verfahren eingebracht werden. Die Öffnungen 105, 106 können von der Unterseite (Öffnungen 105) und/oder von der Oberseite (Öffnungen 106) aus in den Packstoff 101 eingebracht sein.

Im Falle einer Nadelperforation haben die Öffnungen 105, 106 häufig die gezeigte Kegelform (Öffnung 105a) oder eine kegelförmige Spitze, die sich in einem Zylinder fortsetzt (Öffnung 105b). Die zur Herstellung der Öffnungen 105, 106 herangezogenen Nadeln 30 haben oft einen Durchmesser von mindestens 0,5 mm, so dass auch die Öffnungen 105, 106 diese Durchmesser haben. Die Durchmesser und auch die Einstichtiefen der Nadeln 30 bei der Bearbeitung des Packstoffes 101 sind so gewählt, dass zwar Luft austreten kann, das Packgut jedoch nicht hindurch gelangt, wobei eine ausreichende Entlüftungsleistung gewährleistet ist, wenn die Dichte zwischen 10 und 30 Entlüftungsöffnungen pro Quadratzentimetern vorgesehen ist. Erfindungsgemäß sind zwischen 50 und 80 Entlüftungsöffnungen pro Quadratzentimeter vorgesehen, wobei jede einzelne Entlüftungsöffnung dann einen Durchmesser von maximal 0,8 mm aufweist. Hierbei wird der Entlüftungsvorgang verbessert, da sich die Luftströme vergleichmäßigen. Besondere Vorteile hat hier das Vorhandensein des Vliesstoffes, der in der Lage ist, Packgut zu binden, insbesondere, wenn es pulverförmig und/oder staubig ist.

Die Figur 2 zeigt einen Packstoff 101 mit einer dritten Schicht 123, die faserhaltig ist. Eine solche faserhaltige Schicht 123 kann ein Flächengebilde aus Papier und/oder aus einem Vliesstoff sein. Im gezeigten Ausführungsbeispiel ist diese dritte Schicht 123 durch ein Verbindungsmittel 124 vollflächig mit der zweiten Schicht 102 verbunden, welche eine gereckte Folienbahn umfasst. Die erste Schicht 103, die zweite Schicht 102 und der Verbindungsstoff 104 sind im Vergleich mit der Figur 1 gleich.

Die Figur 3 zeigt ein Packmittel, das vorteilhafterweise einen Packstoff 101 gemäß Figur 1 umfasst. Eine Bahn des Packstoffs 101 ist entlang zweier parallel verlaufender Längskanten 110 und 111 umgelegt, wobei eine untere Lage 112 gebildet ist. Die obere Lage 113 umfasst zwei Teile, welche jeweils von einem Seitenbereich 114 beziehungsweise 115 des Packstoffs 101 gebildet ist, wobei die Randbereiche sich im Überlappungsbereich 116 überlappen. Damit bildet der Packstoff 101 einen Schlauch 13, der später beispielsweise zu Schlauchstücken 18 vereinzelt und mit Böden versehen werden kann. Jedoch kann auch eine andere Weiterverarbeitung vorgesehen sein.

Zur Befestigung der übereinander gelegten Randbereiche ist eine Klebstoff- oder Extrudatspur 117 vorgesehen. Eine Extrudatspur 117 ist gegenüber anderen Fügeverfahren bevorzugt, da mit einem Extrudat, d. h. einem schmelzeförmigen Kunststoff, eine sehr haltbare Verbindung auch verschiedener Materialien erzeugt wird. Dies gilt insbesondere, wenn, wie im vorliegenden Fall, ein Vliesstoff 103 und eine Kunststoffbahn 102 miteinander verbunden sind.

Im in Figur 3 gezeigten Ausführungsbeispiel ist der Packstoff 101 derart gefaltet, dass der Vliesstoff 103 die Außenlage bildet, also der Umgebung zugewandt ist. Die gereckte Folienbahn 102 ist dem Hohlraum, also dem Inneren des Packmittels 101 zugeordnet. Demnach ist die Innenschicht aus der gereckten Folienbahn gebildet. Sonst entspricht die Schichtbildung dem in der Figur 1 gezeigtem Ausführungsbeispiel.

Diese Anordnung bietet verschiedene Vorteile. Insbesondere bei der Weiterverarbeitung des gezeigten Packmittels 101 zu Säcken mittels Heißluftsiegelung wird die Heißluft nur auf die äußere Schicht gegeben, hier also auf den Vliesstoff 103. Damit ist vermieden, dass die gereckte Folienbahn 102 zu stark erwärmt wird. Eine Erwärmung würde eine Umkehrung des Reckens mit sich bringen, d. h., die Folie würde sich in Umkehrung des Reckvorgangs wieder zusammenziehen. Sie verlöre damit insbesondere ihre Festigkeit beziehungsweise Tragfähigkeit. Darüber hinaus kann bei Öffnungen 105, 106, deren kegelstumpfartigen Verjüngungen nach außen zeigen, der Entlüftung in besonderer Weise dienlich sein, da bei pulvrigen und staubigen Packgütern das Packgut teilweise vom Vliesstoff 103 aufgenommen werden kann. Schließlich kann ein Vliesstoff 103 eine rutschhemmende Eigenschaft aufweisen. Bei übereinander gestapelten, befüllten Packmitteln verrutschen diese häufig gegeneinander, wenn sie beispielsweise aus reiner Kunststofffolie bestehen. Dieser Effekt dürfte bei einer einen Vliesstoff 103 umfassenden äußeren Schicht nicht auftreten.

Das in der Figur 4 gezeigte Ausführungsbeispiel zeigt die Situation, bei der die Außenschicht durch die gereckte Kunststoffbahn 102 gebildet ist, wogegen die Innenschicht durch den Vliesstoff 103 gebildet ist. Der gezeigte Packstoff 101 entspricht hinsichtlich der Formgebung im Wesentlichen der in der Figur 3 gezeigten Ausführungsform.

Eine Variante, die in diesem Ausführungsbeispiel gezeigt ist, betrifft die Verbindung der Randbereiche der Seitenbereiche 114 und 115. Die Extrudatspur 117 weist an einigen Stellen Unterbrechungen auf, von denen eine Unterbrechung 118 dargestellt ist. Parallel zur ersten Extrudatspur 117 ist eine weitere Extrudatspur 119 gezeigt, die ebenfalls Unterbrechungen 118 umfasst. In Erstreckungsrichtung des Packstoffes 101 gesehen liegen diese Unterbrechungen 118 jedoch an anderen Stellen als die Unterbrechungen 118 der Extrudatspur 117. Dies ist damit angedeutet, dass die zu sehende Stirnfläche der Extrudatspur 119 gegenüber dem Schnitt durch den Packstoff 101 zurückspringt. Diese stellt die Unterbrechung 120 dar. Die Vorteile dieser Anordnung und Ausführung der Verbindung beider Randbereiche wurde bereits weiter oben erläutert.

Selbstverständlich sind die in den Figuren 3 und 4 gezeigten Ausführungsvarianten der Extrudatspuren 117, 119 auch in dem Packmittel 101 der jeweils anderen Figur anwendbar.

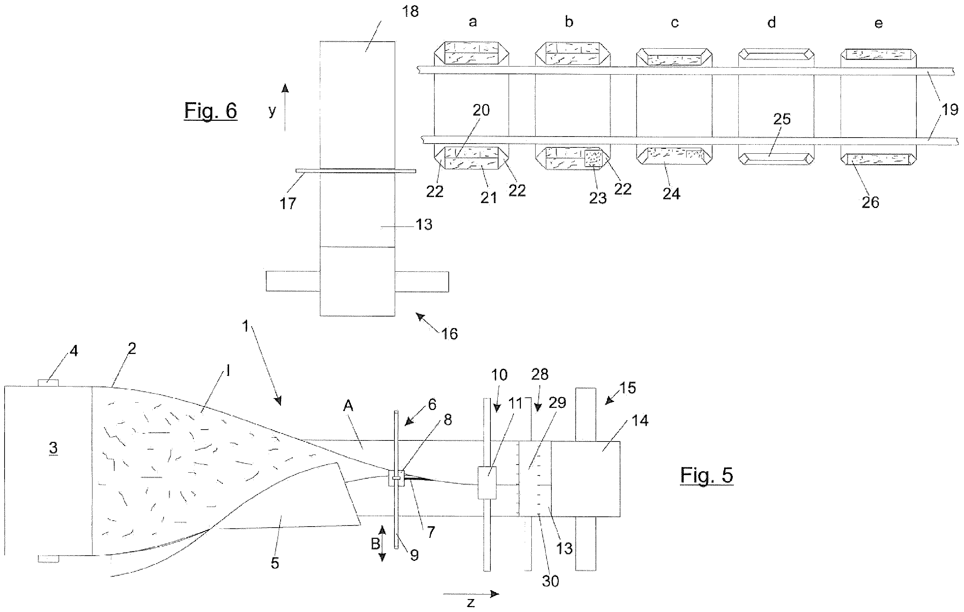

Fig. 5 zeigt eine Prinzipskizze zur Schlauchbildung aus einem vlieshaltigen Material. Diese Schlauchbildung erfolgt in einer Schlauchbildungsstation 1. Der Schlauchbildungsstation 1 wird ein Flachbahnmaterial 2 aus einem Packmittel 101, wie es vorstehend beschrieben ist und welches beispielsweise in den Figuren 1 und 2 gezeigt ist, zugeführt, welches in Form eines Wickels 3 bereitgestellt wird. Dieser Wickel 3 kann auf oder mit einem Wickelträger 4 rotieren, welcher beispielsweise im Maschinengestell der Schlauchbildungsstation oder im Gestell einer Abwickelstation 16 gelagert ist.

Das Flachbahnmaterial 2 umfasst in der dargestellten Ausführungsform, auf die die vorliegende Erfindung jedoch nicht beschränkt ist, zwei Schichten. Die erste Schicht umfasst ein Kunststoffmaterial und wird, da diese Schicht nach der Schlauchbildung nach außen gerichtet ist, mit dem Buchstaben A gekennzeichnet. Die zweite Schicht, die nach der Schlauchbildung nach innen gerichtet ist, wird mit dem Buchstaben I gekennzeichnet. Die Schicht I kann dabei aus einem Vliesstoff bestehen. Dieses wird in der Figur 5 durch unregelmäßige und ungleichmäßige Striche verdeutlicht.

Das Flachbahnmaterial 2 wird von einer oder mehreren Vorzugs- und/oder Vorschubeinrichtungen in Transportrichtung z transportiert. Vorzugs- oder Vorschubeinrichtungen, die Transportwalzenpaare umfassen können, sind in der Figur 1 nicht dargestellt. Nach dem Abwickeln wird zunächst eine Seite des Flachbahnmaterials 2 mittels eines Leitblechs 5 auf sich selbst umgeschlagen. Es können auch weitere Leitelemente zur zeitgleichen Bildung von Seitenfalten vorgesehen sein, welche allerdings nicht dargestellt sind.

Kurz nach dem Beginn des Umschlagens der ersten Seite des Flachbahnmaterials 2 wird auch dessen zweite Seite umgeschlagen. Beide Seiten werden soweit eingeschlagen, dass die Seitenränder anschließend aufeinander liegen. Das Umschlagen der zweiten Seite erfolgt wiederum mit einem Leitelement, das wie das Leitblech 5 ausgestaltet sein kann. Dieses Leitelement ist der Übersichtlichkeit halber nicht eingezeichnet.

Bevor sich die beiden Seitenränder berühren, wird mit dem ersten Seitenrand auf der Außenseite, die mit dem zweiten Seitenrand in Kontakt kommt, eine Behandlung vorgenommen, die dem Verbinden der beiden Seitenränder dient. In der Figur 5 ist daher eine Extrusionseinrichtung 6 dargestellt, mit welcher eine Kunststoffschmelze auf den Rand der ersten Seite als Extrudatspur 117 aufgetragen wird. Direkt anschließend wird die zweite Seite mit ihrer Innenseite auf die erste Seite aufgebracht. Hierbei wird eine Vliesschicht 103 mit einer Kunststoffschicht 102 verbunden, wobei die Kunststoffschmelze eine sehr feste Verbindung bewirkt. Das aufgetragene Extrudat 7 ist in der Figur 1 als dicke Linie dargestellt.

Die Extrusionseinrichtung 6 umfasst einen Extrusionskopf 8, dem über nicht gezeigte Zuführleitungen die Kunststoffschmelze zugeführt wird. Der Extrusionskopf 8 kann in Richtung des Doppelpfeils B quer zur Transportrichtung des Flachbahnmaterials 2 verschiebbar gelagert sein. Hierzu dient eine Traverse 9, die im Maschinengestell der Schlauchbildungsstation 1 befestigt sein kann. In einer weiteren Ausführungsform kann eine weitere, hier nicht gezeigte Extrusionsvorrichtung und/oder ein Extrusionskopf vorgesehen sein, um eine zweite, parallele Extrudatspur 119 zu erzeugen, wie sie bereits im Zusammenhang mit der Figur 4 erläutert wurde. Zur Erzeugung unterbrochener Extrudatspuren kann jede Extrusionsvorrichtung mit zumindest einem Ventil der Extrudatfluss unterbrechbar sein.

Nach dem Auftragen des Extrudats und dem Aufbringen der zweiten Seite kann die Fügenaht mit einer Anspressvorrichtung 10 zusätzlich verpresst werden. Diese Anpressvorrichtung 10 umfasst vorteilhafterweise eine Anpresswalze 11, welche Bestandteil eines Presswalzenpaares sein kann. Die Anpresswalze 11 ist über eine Achse oder Welle 12 relativ zum Maschinengestell rotierbar. Die Anpresswalze 11 kann auch zur Kühlung der Fügenaht verwendet werden. Die Walze 11 kann dazu so ausgestaltet sein, dass sie von einem Kühlmedium durchströmt werden kann. Bei Kontakt der Walze 11 kann diese dann von der Fügenaht Wärme abführen, so dass die Fügenaht schneller eine ausreichende Haltbarkeit aufweist. Es sind jedoch auch weitere Kühlverfahren und Kühlvorrichtungen denkbar, wie zum Beispiel eine Einrichtung zum Aufblasen von Kühlluft.

Nach dem Verpressen der Fügenaht kann der so entstandene Schlauch 13 auf einen neuen Wickel 14 einer Wickelstation 15 aufgewickelt werden.

Zur Sicherstellung der späteren Entlüftung des Sacks während oder nach dessen Befüllung müssen Entlüftungsöffnungen vorgesehen sein. Hierzu ist eine Perforiereinrichtung 28 vorgesehen, welche eine Perforierwalze 29 umfassen kann, welche relativ zum Maschinengestell rotiert und auf ihrem Außenumfang Nadeln 30 tragen kann, welche in das Schlauchmaterial eindringen und so Entlüftungslöcher herstellen. Auch andere Arten, beispielsweise eine berührungslos arbeitende Perforiereinrichtung, sind denkbar. Auch die Anordnung der Perforiereinrichtung ist nicht auf die gezeigte Anordnung beschränkt. Die Perforiereinrichtung kann auch vor der eigentlichen Schlauchbildungseinrichtung angeordnet sein. Auch eine Anordnung direkt vor der Trenneinrichtung ist denkbar. In jedem Fall muss die Perforation jedoch vor der Vereinzelung des Schlauches zu Schlauchstücken erfolgt sein.

In der Figur 6 sind nun die Verarbeitungsschritte zur Bildung von einzelnen Säcken aus dem Schlauch 13 dargestellt. Dieser Schlauch, der als Wickel 14 aus der Schlauchbildungsstation 1 in die Abwickelvorrichtung 16 transportiert wurde, wird mittels einer Trenneinrichtung 17, welche beispielsweise eine quer zur anfänglichen Transportrichtung y verschiebbare Schneidklinge umfasst, in einzelne Schlauchstücke 18 vereinzelt.

Anschließend wird die Transportrichtung der Schlauchstücke 18 verändert, so dass diese nun quer zu ihrer Erstreckungsrichtung, die in Richtung y zeigt, in Richtung z weiter transportiert werden. Hierzu ist eine Transportvorrichtung 19 vorgesehen, welche beispielsweise als Doppelriemenförderer ausgestaltet sein kann.

Im ersten Bearbeitungsschritt a zur Ausbildung der Sackböden, der in der Bodenaufziehstation erfolgt, werden die Schlauchstückenden zunächst aufgezogen. Dieser Schritt kann mithilfe von Saugern erfolgen, welche an den Enden die beiden Lagen etwas auseinander ziehen. Mit Spreizern können nun die Lagen in eine Ebene gebracht und ausgestrichen werden, wobei der Boden entlang der so genannten Bodenmittenlinie 20 umgeklappt wird. Die derart aufgezogenen Enden bilden nun ein Bodenrechteck 21 mit seitlichen Dreieckstaschen 22. In der Figur 2 sind nur die entsprechenden Elemente des unteren Endes des Schlauchstücks 18 mit Bezugszeichen versehen. Diese gelten sinngemäß jedoch auch für das andere Ende des Schlauchstücks. In der Figur ist erkennbar, dass bei den Dreieckstaschen die Kunststoffschicht nach außen zeigt, wohingegen bei dem Bodenrechteck die Vliesschicht sichtbar ist.

Im Bearbeitungsschritt b kann nun ein Ventilzettel 23 auf ein offenes Ende des Schlauchstücks 18 aufgebracht und dort befestigt werden. Das Befestigen erfolgt vorteilhafterweise mittels Heißluftschweißen, wobei der Ventilzettel 23 zumindest an der Dreieckstasche 22 befestigt wird.

Im Bearbeitungsschritt c werden nun die äußeren Laschen 24 des Bodenrechtecks 21 so weit zurückgefaltet, dass die äußere Kante einer Lasche 24 über die Bodenmittenlinie 20 hinweg bewegt wird. Das Zurückfalten erfolgt dabei beispielsweise mit Leitelementen, wie beispielsweise mit Leitblechen 5. Die Bereiche der Dreieckstaschen 22, die bei diesem Vorgang ebenfalls mit zurückgefaltet werden, können miteinander verbunden werden. Anstelle der äußeren Laschen 24 können auch die inneren Laschen 25 zurückgefaltet werden.

Das Zurückfalten der inneren Laschen 25 erfolgt jedoch vorzugsweise im Verfahrensschritt d, wobei nun die innere Lasche 25 die äußere Lasche 24 in einem Überdeckungsbereich überdeckt. In diesem Überdeckungsbereich können beide Laschen 24, 25 miteinander verbunden werden, so dass bereits jetzt ein brauchbarer Sackboden entstanden ist. Da auch der Ventilzettel 23 eingeschlagen wurde, ist auf diese Weise ein Ventilschlauch entstanden, der die Befüllung des Sackes ermöglicht, aber einen Austritt des Befüllgutes nach dem Befüllen vermeidet.

In einer besonders bevorzugten Ausführungsform der Erfindung erfolgt noch ein weiterer Bearbeitungsschritt e, bei dem auf die bereits geschlossenen Böden jeweils ein Bodendeckblatt 26 aufgetragen und vorzugsweise mit einem Heißluftschweißverfahren befestigt wird. Das Bodendeckblatt 26 ist dabei vorzugsweise so dimensioniert, dass es Bereiche der Laschen 24 und 25 sowie Bereiche der Dreieckstaschen 22 überdeckt. Es wird zudem mit seiner Kunststoffschicht auf den Boden gelegt, so dass die Kunststoffschichten einander zugewandt sind. Dies ermöglicht eine sehr haltbare Verbindung, welche durch Heißluftschweißen herstellbar ist. Im Bereich der Überdeckung der Laschen 24 und 25 kann die Lasche 25 mit Ausstanzungen versehen sein, so dass das Bodendeckblatt 25 auch im Bereich dieser Überdeckung einen direkten Kontakt zu der Lasche 24 hat. Auf ähnliche Weise kann ein direkter Kontakt des Bodendeckblatts 26 mit dem Ventilzettel 23 hergestellt werden.

| **Bezugszeichenliste** | |
|---|---|
| 1 | Schlauchbildungsstation |
| 2 | Flachbahnmaterial |
| 3 | Wickel |
| 4 | Wickelträger |
| 5 | Leitblech |
| 6 | Extrusionseinrichtung |
| 7 | Extrudat |
| 8 | Extrusionskopf |
| 9 | Traverse |
| 10 | Anpressvorrichtung |
| 11 | Anpresswalze |
| 12 | Achse oder Welle |
| 13 | Schlauch |
| 14 | Wickel |
| 15 | Wickelstation |
| 16 | Abwickelvorrichtung |
| 17 | Trenneinrichtung |
| 18 | Schlauchstück |
| 19 | Transportvorrichtung |
| 20 | Bodenmittenlinie |
| 21 | Bodenrechteck |
| 22 | Dreieckstaschen |
| 23 | Ventilzettel |
| 24 | äußere Lasche |
| 25 | innere Lasche |
| 26 | Bodendeckblatt |
| 27 | Umlenkeinrichtung |
| 28 | Perforiereinrichtung |
| 29 | Perforierwalze |
| 30 | Nadeln |
| 101 | Packstoff |

| | |
|---|---|
| 102 | Gereckte Kunststofffolie |
| 103 | Vliesstoff |
| 104 | Verbindungsstoff |
| 105 | Öffnung |
| 105a | Öffnung Kegelform |
| 105b | Öffnung mit kegelförmiger Spitze |
| 106 | Öffnung |
| 110 | Längskante |
| 111 | Längskante |
| 112 | Untere Lage |
| 113 | Obere Lage |
| 114 | Seitenbereich des Packstoffs |
| 115 | Seitenbereich des Packstoffs |
| 116 | Überlappungsbereich |
| 117 | Klebstoff-/Extrudatspur |
| 118 | Unterbrechung der Extrudatspur |
| 119 | Extrudatspur |
| 120 | Unterbrechung |
| 123 | Dritte Schicht |
| 124 | Verbindungsmittel |
| A | Außenseite des Flachbahnmaterials 2 |
| I | Innenseite des Flachbahnmaterials 2 |
| a | erster Bearbeitungsschritt |
| b | zweiter Bearbeitungsschritt |
| c | dritter Bearbeitungsschritt |
| d | vierter Bearbeitungsschritt |
| e | fünfter Bearbeitungsschritt |
| f | Stapelung von Säcken |
| y | anfängliche Transportrichtung des Schlauchstücks |
| Z | Transportrichtung des Flachbahnmaterials 2 bzw. des Schlauches |
| B | Doppelpfeil |
| C | Doppelpfeil |

## Patentansprüche

1. Sackförmiges Packmittel,
welches einen Packstoff (101) umfasst, der zumindest zweilagig angeordnet ist, wobei der Packstoff wenigstens zwei Schichten (A, I) umfasst, wobei eine erste Schicht Vliesstoff (103) umfasst, wobei eine zweite Schicht, welche mit dem Vliesstoff zumindest bereichsweise verbunden ist, einen Kunststoff (102) umfasst,
**dadurch gekennzeichnet, dass**
als Kunststoff zumindest eine monoaxial oder biaxial gereckte Folienbahn (102) vorgesehen ist, wobei der Kunststoff mittels eines ersten Verbindungsstoffes stoffschlüssig an dem Vliesstoff befestigt ist, wobei der erste Verbindungsstoff ein Polyolefin, insbesondere Polypropylen oder Polyethylen, ist, wobei der Packstoff Entlüftungsöffnungen (105, 106) umfasst, wobei zwischen 50 und 80 Entlüftungsöffnungen pro Quadratzentimeter vorgesehen sind, wobei jede einzelne Entlüftungsöffnung einen Durchmesser von maximal 0,8 mm aufweist.

2. Packmittel nach dem vorstehenden Anspruch,
**dadurch gekennzeichnet, dass**
der Kunststoff wenigstens ein Polyolefin ist.

3. Packmittel nach einem der vorstehenden Ansprüche,
**dadurch gekennzeichnet, dass**
der Kunststoff ein Polypropylen ist.

4. Packmittel nach einem der vorstehenden Ansprüche,
**dadurch gekennzeichnet, dass**
der Packstoff (101) zumindest bereichsweise eine dritte Schicht umfasst, die ein faserhaltiges Material beinhaltet.

5. Packmittel nach dem vorstehenden Anspruch,
**dadurch gekennzeichnet, dass**
das faserhaltige Material Vliesstoff oder Papier umfasst.

6. Packmittel nach einem der beiden vorstehenden Ansprüche,
**dadurch gekennzeichnet, dass**
die dritte Schicht an der der ersten Schicht abgewandten Seite der zweiten Schicht angeordnet ist.

7. Packmittel nach einem der drei vorstehenden Ansprüche,
**dadurch gekennzeichnet, dass**
die dritte Schicht mit der ersten und/oder zweiten Schicht mittels eines weiteren Verbindungsstoffes verbunden ist.

8. Packmittel nach dem vorstehenden Anspruch,
**dadurch gekennzeichnet, dass**
der erste und der zweite Verbindungsstoff identisch sind.

9. Packmittel nach einem der vorstehenden Ansprüche,
**dadurch gekennzeichnet, dass**
zumindest eine Längsnaht vorgesehen ist, bei welcher mit zumindest einer Klebstoff- oder Extrudatspur (117) zwei übereinander gelegte Randbereiche des Packstoffs (101) miteinander verbunden sind.

10. Packmittel nach dem vorstehenden Anspruch
**dadurch gekennzeichnet, dass**
in der Längsnaht zwei parallel verlaufende Klebstoff- oder Extrudatspuren vorgesehen sind, wobei jede dieser Spuren Unterbrechungen (118, 120) umfasst, wobei diese Unterbrechungen (118, 120) in Richtung der Längsnaht gesehen an unterschiedlichen Stellen angeordnet sind.

11. Packmittel nach einem der beiden vorstehenden Ansprüche,
**dadurch gekennzeichnet, dass**
zwei angeformte Böden, vorzugsweise Kreuzböden, vorgesehen sind.

12. Packmittel nach dem vorstehenden Anspruch
**dadurch gekennzeichnet, dass**
im Bereich eines angeformten Bodens eine Füllöffnung, vorzugsweise ein Ventil, vorgesehen ist.

13. Packmittel nach einem der beiden vorstehenden Ansprüche
**dadurch gekennzeichnet, dass**
zur Bildung eines Boden Bestandteile des Packstoffs (101) miteinander versiegelt sind.

14. Packmittel nach einem der drei vorstehenden Ansprüche
**dadurch gekennzeichnet, dass**
der zumindest ein Boden durch wenigstens zwei sich überlappende Bestandteile des Packstoffes (101) gebildet sind, wobei die Überlappung mit einem Deckblatt bedeckt ist, wobei das Deckblatt mit beiden Bestandteilen mittels einer festen Verbindung verbunden ist.

15. Packmittel nach dem vorstehenden Anspruch
**dadurch gekennzeichnet, dass**
die Verbindung aus per Heißluft angeschmolzenen und in Kontakt gebrachten Bereichen des Packstoffes (101) besteht.

16. Verfahren zur Herstellung eines Packmittels nach einem der vorstehenden Ansprüche,
**gekennzeichnet durch**
die folgenden Verfahrensschritte:
- Bereitstellen eines Flachbahnmaterials, welches zumindest zum Teil ein Kunststoffvliesmaterial umfasst,
- Bilden eines Schlauches aus dem Flachbahnmaterial, wobei die Seitenbereiche des Flachbahnmaterials unter Ausbildung einer Überlappung aufeinandergelegt und miteinander verbunden werden, so dass der Schlauch (13) zwei Materiallagen umfasst,
- Vereinzeln des Schlauches (13) zu Schlauchstücken (18) und
- Anformen eines Bodens an zumindest einem Ende eines Schlauchstücks (18).

## Claims

1. A sack-shaped packaging means,
which comprises a packaging material (101), which is arranged in at least two layers, wherein the packaging material comprises at least two layers (A, I), wherein a first layer comprises a non-woven fabric (103), wherein a second layer, which is connected in at least some regions to the non-woven fabric, comprises a plastic (102),
**characterized in that**
at least one monoaxially or biaxially stretched film web (102) is provided as plastic, wherein the plastic is fastened integrally bonded to the non-woven fabric by means of a first connecting material, wherein the first connecting material is a polyolefin, in particular a polypropylene or polyethylene, wherein the packaging material comprises vent openings (105, 106), wherein between 50 and 80 vent openings are provided per square centimeter, wherein each individual vent opening has a diameter of maximally 0.8 mm.

2. The packaging means according to the preceding claim
**characterized in that**
the plastic is at least one polyolefin.

3. The packaging means according to any one of the preceding claims,
**characterized in that**
the plastic is a polypropylene.

4. The packaging means according to any one of the preceding claims,
**characterized in that**
the packaging material (101) comprises, at least in some regions, a third layer, which contains a fiber-containing material.

5. The packaging means according to the preceding claim,
**characterized in that**
the fiber-containing material comprises non-woven fabric or paper.

6. The packaging means according to one of the two preceding claims,
**characterized in that**
the third layer is arranged on the side of the second layer facing away from the first layer

7. The packaging means according to one of the three preceding claims,
**characterized in that**
the third layer is connected to the first and/or second layer by means of a further connecting material.

8. The packaging means according to the preceding claims,
**characterized in that**
the first and the second connecting material are identical.

9. The packaging means according to any one of the preceding claims,
**characterized in that**
at least one longitudinal seam is provided, in which two superimposed edge regions of the packaging material (101) are connected to one another with at least one adhesive or extrudate track (117).

10. The packaging means according to the preceding claim,
**characterized in that**
two parallel adhesive or extrudate tracks are provided in the longitudinal seam, wherein each of these tracks comprises interruptions (118, 120), wherein said interruptions (118, 120), seen in the direction of the longitudinal seam, are arranged at different points.

11. The packaging means according to one of the two preceding claims,
**characterized in that**
two integrally formed bottoms, preferably cross-bottoms, are provided.

12. The packaging means according to the preceding claim,
**characterized in that**
a filling opening, preferably a valve, is provided in the region of an integrally formed bottom.

13. The packaging means according to one of the two preceding claims,
**characterized in that**
components of the packaging material (101) are sealed together to form a bottom.

14. The packaging means according to one of the three preceding claims,
**characterized in that**
the at least one bottom is formed by at least two overlapping components of the packaging material (101), wherein the overlap is covered with a cover sheet, wherein the cover sheet is connected to both components by means of a fixed connection.

15. The packaging means according to the preceding claim,
**characterized in that**
the connection consists of regions of the packaging material (101) fused and brought into contact by hot air.

16. A method for producing a packaging means according to any one of the preceding claims,
**characterized by**
the following method steps:
- providing a flat web material, which at least partially comprises a plastic non-woven material,
- forming a hose from the flat web material, wherein the side regions of the flat web material are placed on top of one another and connected to one another forming an overlap, such that the hose (13) comprises two material layers.
- separating the hose (13) to form hose pieces (18) and
- integrally forming a bottom on at least one end of a hose piece (18).

## Revendications

1. Produit d'emballage en forme de sac,
qui comprend un matériau d'emballage (101) qui est disposé sur au moins deux couches, dans lequel le matériau d'emballage comprend au moins deux couches (A, I), dans lequel une première couche comprend un non-tissé (103), dans lequel une deuxième couche, qui est reliée avec le non-tissé au moins à certains endroits, comprend une matière plastique (102),
**caractérisé en ce que**
en tant que matière plastique, au moins une bande de film (102) étirée de manière monoaxiale ou biaxiale, est prévue, dans lequel la matière plastique est fixée au non-tissé par liaison de matière au moyen d'une première matière de liaison, dans lequel la première matière de liaison est une polyoléfine, plus particulièrement du polypropylène ou du polyéthylène, dans lequel le matériau d'emballage comprend des ouvertures d'aération (105, 106), dans lequel, entre 50 et 80 ouvertures d'aération par centimètre carré sont prévues, dans lequel chaque ouverture d'aération présente un diamètre de 0,8 mm maximum.

2. Produit d'emballage selon la revendication précédente,
**caractérisé en ce que**
la matière plastique est au moins une polyoléfine.

3. Produit d'emballage selon l'une des revendications précédentes,
**caractérisé en ce que**
la matière plastique est un polypropylène.

4. Produit d'emballage selon l'une des revendications précédentes,
**caractérisé en ce que**
le matériau d'emballage (101) comprend, au moins à certains endroits, une troisième couche qui comprend un matériau contenant des fibres.

5. Produit d'emballage selon la revendication précédente,
**caractérisé en ce que**
le matériau contenant des fibres comprend un non-tissé ou un papier.

6. Produit d'emballage selon l'une des deux revendications précédentes,
**caractérisé en ce que**
la troisième couche est disposée sur la face de la deuxième couche opposée à la première couche.

7. Produit d'emballage selon l'une des trois revendications précédentes,
**caractérisé en ce que**
la troisième couche est reliée avec la première et/ou la deuxième couche au moyen d'une matière de liaison supplémentaire.

8. Produit d'emballage selon la revendication précédente,
**caractérisé en ce que**
les première et deuxième matières de liaison sont identiques.

9. Produit d'emballage selon l'une des revendications précédentes,
**caractérisé en ce que**
au moins un cordon longitudinal est prévu, dans lequel, avec au moins une piste d'adhésif ou d'extrudat (117), deux zones de bord superposées du matériau d'emballage (101) sont reliées entre elles.

10. Produit d'emballage selon la revendication précédente,
**caractérisé en ce que**
dans le cordon longitudinal, sont prévues deux pistes d'adhésif ou d'extrudat parallèles entre elles, dans lequel chacune de ces pistes présente des interruptions (118, 120), dans lequel ces interruptions (118, 120) sont disposées à des endroits différents, vues dans la direction du cordon longitudinal.

11. Produit d'emballage selon l'une des deux revendications précédentes,
**caractérisé en ce que**
deux fonds moulés, de préférence des fonds croisés, sont prévus.

12. Produit d'emballage selon la revendication précédente,
**caractérisé en ce que**
au niveau d'un fond moulé, est prévu une ouverture de remplissage, de préférence une vanne.

13. Produit d'emballage selon l'une des deux revendications précédentes,
**caractérisé en ce que**
pour la formation d'un fond, des parties du matériau d'emballage (101) sont scellées entre elles.

14. Produit d'emballage selon l'une des trois revendications précédentes,
**caractérisé en ce que**
l'au moins un fond est constitué par au moins deux parties superposées du matériau d'emballage (101), dans lequel la superposition est recouverte d'une feuille de recouvrement, dans lequel la feuille de recouvrement est reliée avec les deux parties au moyen d'une liaison ferme.

15. Produit d'emballage selon la revendication précédente,
**caractérisé en ce que**
la liaison est constituée de zones du matériau d'emballage (101) fondues par de l'air chaud et mises en contact.

16. Procédé de fabrication d'un produit d'emballage selon l'une des revendications précédentes,
**caractérisé par**
les étapes suivantes :
- mise à disposition d'un matériau à bande plane, qui comprend au moins en partie un matériau de type non-tissé en matière plastique,
- formation d'une gaine à partir du matériau à bande plane, dans lequel les zones latérales du matériau à bande plane sont superposées et reliées entre elles en formant une superposition, de façon à ce que la gaine (13) comprenne deux couches de matériau,
- séparation de la gaine (13) en morceaux de gaine (18) et
- moulage d'un fond au niveau d'au moins une extrémité d'un morceau de gaine (18).
